# EUROPÄISCHE PATENTSCHRIFT

(11) **EP 1 838 561 B1**
(45) Veröffentlichungstag und Bekanntmachung des Hinweises auf die Patenterteilung: **27.02.2008**
(21) Anmeldenummer: 06702544.5
(22) Anmeldetag: 04.01.2006
(51) Int. Cl.: B60R 22/20, B60R 22/26

(54) **HÖHENVERSTELLBARE UMLENKVORRICHTUNG FÜR EINEN DREIPUNKTGURT, FAHRZEUGSITZ MIT EINEM DREIPUNKTGURT SOWIE VERFAHREN ZUR HÖHENVERSTELLUNG DES OBEREN HALTEPUNKTES EINES DREIPUNKTGURTES**
HEIGHT-ADJUSTABLE DEFLECTION DEVICE FOR A THREE-POINT SEAT-BELT, VEHICLE SEAT COMPRISING A THREE-POINT SEAT-BELT AND METHOD FOR ADJUSTING THE HEIGHT OF THE UPPER RETAINING POINT OF A THREE-POINT SEAT-BELT
DISPOSITIF DE DEVIATION REGLABLE EN HAUTEUR POUR CEINTURE TROIS POINTS, SIEGE DE VEHICULE EQUIPE D'UNE CEINTURE TROIS POINTS ET PROCEDE DE REGLAGE EN HAUTEUR DU POINT DE RETENUE SUPERIEUR D'UNE CEINTURE TROIS POINTS

(30) Priorität: 04.01.2005 DE 102005000736
(43) Veröffentlichungstag der Anmeldung: 03.10.2007
(73) Patentinhaber: Isringhausen GmbH & Co. KG, 32657 Lemgo (DE)
(72) Erfinder: FUHRKEN, Dietmar, 32657 Lemgo (DE); TITZ, Winfried, 32758 Detmold (DE)
(74) Vertreter: DTS München
(86) Internationale Anmeldenummer: PCT/EP2006/000039
(87) Internationale Veröffentlichungsnummer: WO 2006/072574

(56) Entgegenhaltungen:
- EP-A- 0 359 954
- EP-A- 0 374 893
- DE-U1- 9 102 217
- FR-A- 2 225 011
- US-A- 4 949 994
- US-A- 5 016 916
- PATENT ABSTRACTS OF JAPAN Bd. 2000, Nr. 23, 10. Februar 2001 (2001-02-10) -& JP 2001 158327 A (DELTA KOGYO CO LTD), 12. Juni 2001 (2001-06-12)

## Beschreibung

Die Erfindung befasst sich mit einer höhenverstellbaren Umlenkvorrichtung für den oberen Haltepunkt eines Dreipunktgurtes, einen Fahrzeugsitz mit einer solchen höhenverstellbaren Umlenkvorrichtung sowie einem Verfahren zur Höhenverstellung des oberen Haltepunktes eines Dreipunktgurtes.

Insbesondere Nutzfahrzeugsitze sind vorzugsweise mit pneumatisch oder mechanisch federnden Schwingsystemen ausgerüstet und schützen damit den Fahrer vor unangenehmen und gesundheitsschädlichen Schwingungen unterschiedlicher Frequenz und Amplitude. Ein weiteres Sicherheitselement ist der Dreipunktgurt. Die ortsfeste fahrzeugseitige Anbringung des dritten Gurtpunktes z.B. an der B-Säule führt wegen der Relativbewegung zwischen Fahrzeug und Sitz bzw. Fahrer zu deutlichem Komfortverlust. Sicherheit und Komfort bieten Fahrzeugsitze, mit vollständig integriertem Dreipunktgurtsystem, mit sitzseitig im Beckenbereich angeordnetem Gurtendbeschlag und gegenüberliegend, für die Fahrerseite in Fahrtrichtung rechts, einem Gurtschloss. Der Schultergurtaustritt ist rückenlehnenseitig integriert und mit dem Gurtroller eines Automatikgurtsystems verbunden. Ein Problem bei Dreipunktsicherheitsgurten ist, dass ein Schrägschultergurt bei einem festen oberen Haltepunkt nicht auf unterschiedlich große Personen optimal wirken kann. Zur Verbesserung dieser Wirkung muss der obere Haltepunkt deswegen in seiner Höhe variiert werden können. Aus der DE 35 30 495 A1 ist eine Vorrichtung bekannt, mittels der der obere Haltepunkt in seiner Höhe variiert werden kann. Hierfür ist an der Rückenlehne des Fahrzeugsitzes eine Schlitzführung ausgebildet, die schräg von oben nach unten verläuft. Sie weist eine Schlitzöffnung mit einer Breite von ca. 3,5 mal der Breite des Sicherheitsgurts auf. Dadurch ist es möglich, dass je nach Größe des Insassen der obere Haltepunkt höher oder tiefer liegt. Dadurch wird eine verbesserte Wirkung des Dreipunktgurtes auf den Insassen erzielt. Allerdings kann der Sicherheitsgurt innerhalb der Schlitzführung ungewollt nach oben oder unten bewegt werden, so dass die optimale Höhe nicht dauerhaft gewährleistet ist. Somit kann sich die prinzipiell mögliche bessere Wirkung unter Umständen nicht mehr entfalten.

Aus der JP 2001-158327 A ist eine höhenverstellbare Umlenkvorrichtung für den oberen Haltepunkt eines Dreipunktgurtes mit einem Halter bekannt, der an einem Trageelement eines Fahrzeugsitzes anbringbar ist. Im Halter ist beweglich ein Umlenker angebracht, der eine Rolle mit einer Drehachse aufweist, über die das Gurtband eines Dreipunktgurtes geführt ist. Parallel zur Drehachse der Rolle weist ein Gehäuse einen Austrittsschlitz für das Gurtband auf. Am Halter und am Umlenker sind Verbindungsmittel so ausgebildet, dass sie in einer Sperrposition formschlüssig miteinander in Eingriff sind und in einer Verstellposition nicht miteinander in Eingriff sind. Der Umlenker ist somit in der Verstellposition um eine Drehachse rotierbar. Der Halter weist eine Verbindungsplatte und zwei Tragwinkel auf, in denen jeweils ein Langloch zur Aufnahme der Drehachse des Umlenkers ausgebildet ist. Eine solche Vorrichtung ist jedoch nicht einfach zu bedienen und ist durch die verschiedenen benötigten Teile auch nicht einfach zu montieren.

Aufgabe der Erfindung ist es deswegen, eine höhenverstellbare Umlenkvorrichtung für den oberen Haltepunkt eines Dreipunktgurtes vorzustellen, die eine einfache Einstellung der Höhe ermöglicht und gleichzeitig dieser obere Haltepunkt nicht mehr ungewollt verändert werden kann. Dies soll auch durch ein möglichst einfaches Verfahren erzielt werden.

Die Aufgabe wird durch eine höhenverstellbare Umlenkvorrichtung mit den Merkmalen des Patentanspruchs 1 und einen Fahrzeugsitz mit den Merkmalen des Patentanspruchs 9 gelöst. Durch den Austrittschlitz wird die Höhe des oberen Haltepunkts des Dreipunktgurtes festgelegt. Der Austrittschlitz befindet sich in dem Unlenker, der in der Sperrposition formschlüssig über entsprechende Verbindungsmittel mit dem Halter verbunden ist. Damit ist eine sichere Festlegung des oberen Haltepunktes gewährleistet. Dadurch, dass in einer Verstellposition kein Eingriff der Verbindungsmittel zwischen dem Halter und dem Umlenker gegeben sind, kann der Umlenker in dieser Position über die Rolle um die Drehachse rotiert werden. Dadurch ändert sich die Höhe des Austrittschlitzes, der im Gehäuse des Umlenkers ausgebildet ist. Damit kann die gewünschte Höhe des Austrittschlitzes und somit des oberen Haltepunktes sehr einfach und individuell festgelegt werden. Durch eine Bewegung des Halters von der Verstellposition in die Sperrposition wird die Höhe des oberen Haltepunkts wie oben beschrieben festgelegt und kann nicht unbeabsichtigt verändert werden. Somit ist gewährleistet, dass der einmal auf die Körpergröße des Insassen eingestellte obere Haltepunkt nicht versehentlich wieder geändert werden kann. Dadurch ist eine immer optimale Wirkung des Dreipunktgurtes auf den Insassen gewährleistet. Die erfindungsgemäße höhenverstellbare Umlenkvorrichtung ist darüber hinaus auch sehr einfach aufgebaut und zu bedienen, da die Rolle und der Umlenker eine einzige gemeinsame Drehachse aufweisen. Dadurch, dass der Halter eine Verbindungsplatte und zwei Tragwinkel aufweist, in denen jeweils ein Langloch zur Aufnahme der Drehachse des Umlenkers ausgebildet ist, ist eine sehr einfache Konstruktion für die Bewegung der Drehachse der Rolle zwischen Sperrposition und Verstellposition gegeben. Dadurch, dass die Drehachse des Umlenkers mittels einer Feder, insbesondere einer Biegefeder, in die Sperrposition gedrückt wird. Dies ist eine äußerst einfache und effiziente Möglichkeit, um den Umlenker in seiner Sperrposition zu halten, wenn keine Verstellung gewollt wird. Dagegen kann ein Überführen in die Verstellposition gegen den Druck der Feder einfach vorgenommen werden. Nach der Verstellung geht der Umlenker dann wieder automatisch in seine Sperrposition über. Dadurch wird auch das erfindungsgemäße Verfahren gemäß Patentanspruch 10 mit den soeben genannten Vorteilen ermöglicht. Unter einem Fahrzeugsitz wird im Rahmen dieser Anmeldung ein Sitz für ein Kraftfahrzeug (auch Nutzfahrzeug), für ein Flugzeug oder für andere Fahrzeuge verstanden, die ein Anschnallen der Insassen nötig machen (auch Vergnügungsgeräte).

Eine vorteilhafte Weiterbildung der Erfindung sieht vor, dass es sich bei den ersten Verbindungsmitteln und den zweiten Verbindungsmitteln jeweils um aufeinander abgestimmte Verzahnungen handelt. Dadurch ist eine sehr einfache Ausgestaltung für Verbindungsmittel gegeben, die leicht voneinander zu lösen sind, um sie in die Verstellposition zu bewegen, und leicht miteinander in einen formschlüssigen Eingriff zu bringen sind, um sie in ihre Sperrposition zu bewegen.

Eine weitere vorteilhafte Weiterbildung der Erfindung sieht vor, dass das Gehäuse des Umlenkers eine zylinderförmige oder eine konzentrisch konvex ausgebildete Mantelfläche um die Drehachse aufweist. Da sich der Austrittschlitz für den Dreipunktgurt, der den oberen Haltepunkt definiert, auf einer zylinderförmigen Mantelfläche befindet, wird die horizontale Position des Austrittschlitzes bei einer vertikalen Bewegung aufgrund der Drehbewegung und seiner Anordnung auf der zylinderförmigen Mantelfläche ebenfalls geändert. Dadurch ist der obere Haltepunkt vorteilhafterweise bei großen Insassen weiter vorne als bei kleinen Insassen, was sich als besonders günstig herausgestellt hat.

Eine weitere vorteilhafte Weiterbildung der Erfindung sieht vor, dass die Rolle einen Gurtaufroller umfasst. Dadurch werden zwei Teile in einem integriert. Somit ist es nicht mehr nötig, zusätzlich zu der Rolle einen Gurtaufroller an einer anderen Stelle anzubringen. Dies ist bei solchen höhenverstellbaren Umlenkvorrichtungen sehr vorteilhaft, die in den Fahrzeugsitz integriert sind, da somit innerhalb des Fahrzeugsitzes Platz eingespart wird.

Eine weitere vorteilhafte Weiterbildung der Erfindung sieht vor, dass die höhenverstellbare Umlenkvorrichtung im Fahrzeugsitz angeordnet ist und der Umlenker teilweise von einer Blende abgedeckt ist. Bei einer im Fahrzeugsitz integrierten Umlenkvorrichtung ist zum einen eine gute ästhetische Wirkung gegeben und zum anderen wird vermieden, dass ein unbeabsichtigtes Einklemmen oder eine andere Verletzung beim Verstellen der Umlenkvorrichtung erfolgen kann.

Eine weitere vorteilhafte Weiterbildung der Erfindung sieht vor, dass die Drehachse im Bereich ihrer beiden Enden jeweils eine Bohrung aufweist, durch die die freien Enden der Feder geführt sind. Dadurch wird erreicht, dass die Drehachse feststeht und in axialer Richtung unverlierbar ist.

Eine weitere vorteilhafte Weiterbildung der Erfindung sieht vor, dass die Drehachse mit der Rolle und/oder dem Gehäuse einstückig ausgebildet ist. Dadurch ist der gesamte Umlenker in einem einzigen Stück ausgeführt.

Weitere Vorteile und Einzelheiten der Erfindung werden anhand des in den Figuren dargestellten Ausführungsbeispiels im Folgenden beschrieben. Es zeigen im Einzelnen:
- Fig. 1: einen schematischen Schnitt durch ein Ausführungsbeispiel einer erfindungsgemäßen höhenverstellbaren Umlenkvorrichtung in ihrer Sperrposition für einen kleinen Insassen,
- Fig. 2: die Umlenkvorrichtung der Figur 1 in ihrer Verstellposition während eines Verstellvorgangs,
- Fig. 3: die Umlenkvorrichtung der Figuren 1 und 2 in ihrer Sperrposition für einen großen Insassen,
- Fig. 4: eine perspektivische, teilweise geschnittene Ansicht der Umlenkvorrichtungen aus den Figuren 1 bis 3 und
- Fig. 5: einen Fahrzeugsitz mit integrierter Umlenkvorrichtung gemäß Figur 4.

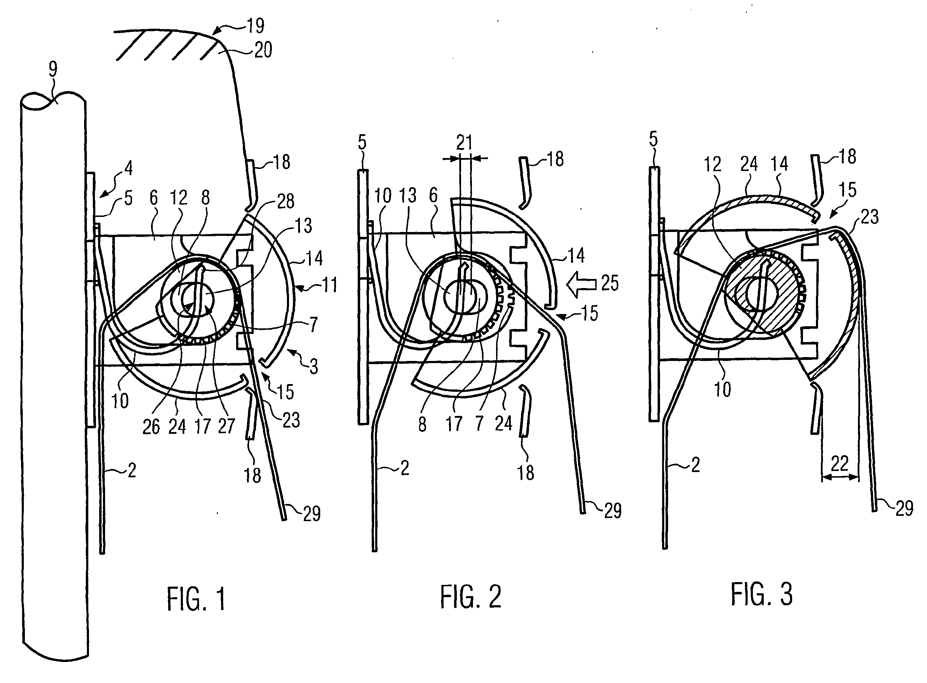

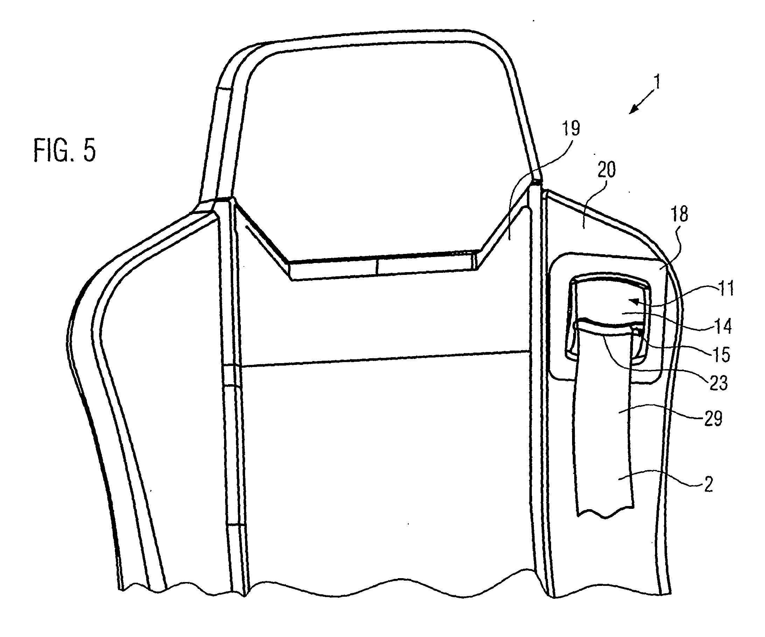

In Figur 1 ist ein Längsschnitt durch einen Fahrzeugsitz 1 (siehe Figur 5) dargestellt, der eine erfindungsgemäße Umlenkvorrichtung 3 aufweist, mittels der die Höhe des oberen Haltepunktes 23 eines Dreipunktgurtes 2 verändert werden kann. Die erfindungsgemäße Umlenkvorrichtung 3 weist dabei drei Komponenten auf, die in ihrer Zusammenwirkung die erfindungsgemäßen Vorteile mit sich bringen. Es handelt sich hierbei um einen Halter 4, einen Umlenker 11 und eine zwischen diesen beiden angeordnete Feder 10.

Der Halter 4 und somit die gesamte erfindungsgemäße Umlenkvorrichtung 3 ist im dargestellten Ausführungsbeispiel über eine Verbindungsplatte 5 mit einem Tragelement 9 des Fahrzeugsitzes 1 fest verbunden. Hierbei sind alle bekannten Verbindungsverfahren möglich, beispielsweise Schweißen, Nieten oder Schrauben. Neben der gezeigten Anordnung innerhalb des Fahrzeugsitzes 1 - im dargestellten Fall in der Rückenlehne 19 innerhalb der Polsterung 20 - kann die erfindungsgemäße Umlenkvorrichtung 3 ebenso direkt am Rahmen des Fahrzeugs, in dem sich der Fahrzeugsitz 1 befindet, angebracht sein. Dies entspricht den Möglichkeiten, wie die bekannten oberen Haltepunkte 23 bislang schon in Fahrzeugen angebracht wurden.

Die Baugruppe des dargestellten Halters 4 weist neben der Verbindungsplatte 5 noch zwei daran angeordnete Tragwinkel 6 auf, die parallel zueinander beabstandet angeordnet sind. In diesen Tragwinkeln 6 sind erste Verbindungsmittel 7 im Bereich des verbindungsplattenfernen Endes ausgebildet. Diese ersten Verbindungsmittel 7 sind in der Form einer Verzahnung ausgeführt. Sie müssen nicht zwangsläufig an jeder der beiden Tragwinkel 6 ausgebildet sein, sondern es reicht prinzipiell auch aus, wenn sie nur an einem der beiden Tragwinkel 6 ausgebildet sind. Dagegen ist es nötig, dass in jedem der beiden Tragwinkel 6 sich gegenüberliegend jeweils ein Langloch 8 vorhanden ist.

In dem Langloch 8 ist die Baugruppe des Umlenkers 11 im Halter 4 gelagert. Der Umlenker 11 umfasst dabei eine Drehachse 13, die innerhalb der Langlöcher 8 angeordnet sind. Konzentrisch um diese Drehachse 13 ist eine Rolle 12 angeordnet. Darüber hinaus ist die Drehachse 13 mit einem Gehäuse 24 verbunden, das zwei Seitenflächen 16 sowie eine Mantelfläche 14 aufweist. Die Mantelfläche 14 ist dabei im Wesentlichen konzentrisch um die Drehachse 13 als eine Zylindermanteloberfläche ausgebildet. Innerhalb der Mantelfläche 14 ist parallel zur Drehachse 13 ein Austrittschlitz 15 ausgebildet. Durch diesen Austrittschlitz 15 läuft das Gurtband 29 eines Dreipunktgurtes 2, das innerhalb des Umlenkers 11 über die Rolle 12 geführt wird.

An den beiden Seitenflächen 16 des Gehäuses 24 sind jeweils zweite Verbindungsmittel 17 ausgebildet. Diese sind auf die ersten Verbindungsmittel 7 an den Tragwinkel 6 des Halters 4 abgestimmt. Im dargestellten Fall handelt es sich um eine inverse Ausbildung zu der Verzahnung an den Tragwinkeln 6. Prinzipiell ist es auch hier möglich, dass nur an einer der beiden Seitenflächen 16 zweite Verbindungsmittel 17 angeordnet sind, wobei jedoch bevorzugt wird, dass an beiden Seitenflächen 16 diese ausgebildet sind. Sollten nur an einer der beiden Seitenflächen 16 zweite Verbindungsmittel 17 ausgebildet sein, so ist darauf zu achten, dass wenn nur an einem der beiden Tragwinkeln 6 erste Verbindungsmittel 7 ausgebildet sind, diese an den jeweils sich zugewandten Elementen vorhanden sind.

An der Verbindungsplatte 5 des Halters 4 ist eine Feder 10, in Form einer Biegefeder, fest angebracht. Die Befestigung kann kraft- oder formschlüssig erfolgen. Im Bereich ihrer freien Enden 28 drückt die Feder 10 die Drehachse 13 des Umlenkers 11 innerhalb des Langlochs 8 nach vorne (in der Darstellung nach rechts). Dies bedeutet, dass die zweiten Verbindungsmittel 17 des Umlenkers 11 mit den ersten Verbindungsmitteln 7 des Halters 4 in Eingriff sind. Der Umlenker 11 befindet sich somit in einer Sperrposition, da sich die Drehachse 13 und somit die Mantelfläche 14 mit dem Austrittschlitz 15 nicht rotieren lassen. In dieser Sperrposition ist somit der obere Haltepunkt 23 des Dreipunktgurtes 2 festgelegt und kann nicht durch ein nach oben oder nach vorne Ziehen des Dreipunktgurtes 2 verändert werden.

Die freien Enden 28 der Feder 10 sind jeweils durch eine Bohrung 26 an den Enden der Drehachse 13 geführt. Damit wird verhindert, dass die Drehachse 13 in axialer Richtung verschoben werden kann. Darüber hinaus steht die Drehachse 13 damit fest und kann nicht rotieren. Im dargestellten Ausführungsbeispiel sind somit die Rolle 12 und das Gehäuse 24 nicht einstückig mit der feststehenden Drehachse 13 ausgebildet, sondern diese beiden Teile können um die Drehachse 13 rotiert werden, solange sie sich in der Verstellposition (siehe Fig. 2) befinden. Es ist genauso gut möglich, die Drehachse 13 einstückig mit der Rolle 12 und/oder dem Gehäuse 24 auszubilden. Dann muss die Feder 10 so auf die Drehachse 13 drücken, dass eine Rotation der Drehachse 13 möglich ist. Anstatt der Bohrungen 26 könnte beispielsweise jeweils eine (teilweise) umlaufende Nut an den Enden 27 der Drehachse 13 ausgebildet sein, in denen die Feder 10 verläuft. Beliebige andere Ausgestaltungen der Feder 10 und der Drehachse 13 sind ebenso möglich, die ein Zusammenwirkung zwischen diesen beiden Teilen ermöglichen, wobei die Drehachse 13 rotieren kann aber dennoch nicht in axialer Richtung verschiebbar ist und gleichzeitig innerhalb des Langlochs 8 nach vorne gedrückt wird.

Die Umlenkvorrichtung 3 befindet sich hinter einer Blende 18, über die sie zum Teil mit ihrer Mantelfläche 14 hervorsteht. Dadurch wird ein ästhetisch ansprechender Abschluss zwischen der Umlenkvorrichtung 3 und der Polsterung 20 der Rückenlehne 19 erreicht. Darüber hinaus kann sich ein Insasse auch nicht aus Versehen eine Verletzung zuziehen, indem er versehentlich seine Hand in die Umlenkvorrichtung 3 steckt. Die Umlenkvorrichtung 3 ist nämlich durch die Blende 18 vollständig abgekapselt.

In Figur 2 ist die erfindungsgemäße Umlenkvorrichtung 3 in einer Verstellposition dargestellt. Aus Übersichtlichkeitsgründen wurde darauf verzichtet, die Polsterung 20 sowie das Tragelement 9 noch einmal darzustellen. Die dargestellte Verstellposition wird dadurch erreicht, dass Druck 25 in Richtung des Doppelpfeils auf den Umlenker 11 über dessen Mantelfläche 14 ausgeübt wird. Die Drehachse 13 wird damit gegen die Federkraft der Feder 10 um den Entriegelungsweg 21 entlang des Langlochs 8 bewegt. Dadurch wird die Feder 10 zusammengedrückt und die Drehachse 13 innerhalb des Langlochs 8 nach links verschoben. Dies bewirkt, dass die ersten Verbindungsmittel 7 der Tragwinkel 6 nicht mehr mit den zweiten Verbindungsmitteln 17 der Seitenflächen 16 des Umlenkers 11 in Eingriff sind. Dadurch ist es möglich, den Umlenker 11 um die Drehachse 13 zu rotieren. Im dargestellten Fall ist dies schon um einen gewissen Winkel geschehen, da der Austrittschlitz 15 gegenüber seiner in Figur 1 dargestellten Position schon nach oben gewandert ist. Der Austrittschlitz 15 kann dann in diejenige Höhe gedreht werden, die für den Insassen auf dem Fahrzeugsitz 1 optimal ist.

In Figur 3 ist eine nach einer Höhenverstellung der Umlenkvorrichtung 3 eingenommene Position dargestellt. Gegenüber der in Figur 2 dargestellten Verstellposition wurde der Umlenker 11 noch weiter gegen den Uhrzeigersinn gedreht, so dass der Austrittschlitz 15 noch weiter nach oben bewegt wurde. Nachdem die gewünschte Höhe des Austrittschlitz 15 erreicht ist, wird der Druck 25 auf die Mantelfläche 14 des Umlenkers 11 weggenommen, so dass die Feder 10 die Drehachse 13 wieder innerhalb des Langlochs 8 nach rechts schiebt und die zweiten Verbindungsmittel 17 der Seitenfläche 16 des Umlenkers 11 wieder in Eingriff mit den ersten Verbindungsmittel 7 an den Tragwinkeln 6 des Halters 4 in Eingriff sind. In dieser Position, die bis auf die Höhe des Austrittschlitzes 15 und somit des oberen Haltepunkts 23 derjenigen in Figur 1 entspricht, befindet sich der Umlenker 11 wieder in seiner Sperrposition, so dass er nicht mehr um die Drehachse 13 rotiert werden kann. Somit ist auch in dieser Position wieder eine sichere Festlegung des oberen Haltepunkts 23 gegeben, ohne dass dieser aus versehen verändert werden könnte.

Es versteht sich von selbst, dass beliebige - nicht dargestellte Sperrpositionen zwischen dem am tiefsten gelegenen oberen Haltepunkt 23 der Figur 1 und dem am höchsten gelegenen oberen Haltepunkt 23 der Figur 3 erhalten werden können. Hierzu ist es lediglich nötig, dass die ersten Verbindungsmittel 7 mit den zweiten Verbindungsmitteln 17 in der gewünschten Position in Eingriff bringbar sind. Es hängt somit von der Feinheit der jeweiligen ersten Verbindungsmittel 7 und der jeweiligen zweiten Verbindungsmittel 17 ab, wie groß die Abstände zwischen zwei benachbarten Punkten für den oberen Haltepunkt 23 sind.

Da sich der Austrittschlitz 15 auf einer zylinderförmigen Mantelfläche 14 befindet, bewegt sich der obere Haltepunkt 23 nicht auf einer vertikalen Geraden sondern auf einer Kreisbahn um die Drehachse 13. Man erhält somit auch einen horizontalen Relativweg 22, der von der Höhe des gewählten oberen Haltepunkts 23 abhängt. Dies bedeutet, dass sich bei kleineren Insassen der obere Haltepunkt 23 weiter hinten (in der Darstellung links) und bei größeren Insassen weiter vorne befindet. Dies ist für die optimale Funktion des Dreipunktgurtes 2 vorteilhaft.

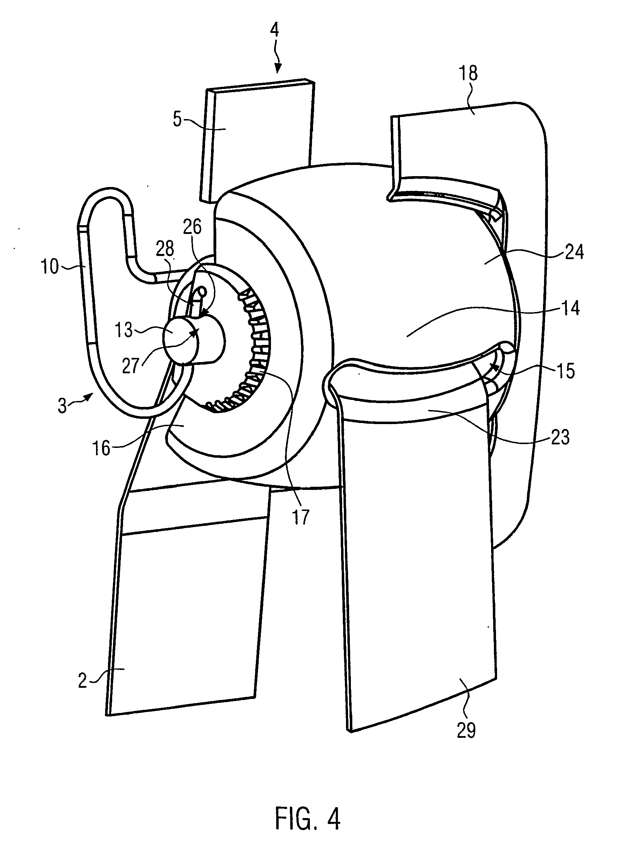

Die in Figur 4 dargestellte dreidimensionale Ansicht verdeutlicht noch einmal, wie die erfindungsgemäße Umlenkvorrichtung 3 ausgebildet ist. Insbesondere ist gut zu erkennen, wie sie sich unterhalb der Blende 18 befindet und wie die zweiten Verbindungsmittel 17 in Form von Verzahnungen an der Seitenfläche 16 des Umlenkers 11 ausgebildet sind. Darüber hinaus ist gut zu erkennen, dass die Feder 10 die Drehachse 13 nach rechts - also in Richtung der Blende 18 - drückt und wie ihre freien Enden 28 die Bohrungen 26 im Bereich der Enden 27 der Drehachse 13 durchsetzen.

In Figur 5 ist ein erfindungsgemäßer Fahrzeugsitz 1 mit einer integrierten erfindungsgemäßen höhenverstellbaren Umlenkvorrichtung 3 und einem darin geführten Dreipunktgurt 2 dargestellt. Hier ist sehr gut zu erkennen, dass eine solche Anordnung sehr ästhetisch aussieht. Darüber hinaus liegt mittels der Blende 18 eine vollständige Kapselung der erfindungsgemäßen Umlenkvorrichtung 3 innerhalb der Rückenlehne 19 des Fahrzeugsitzes 1 in der Polsterung 20 vor. Eine Verletzung beim Bedienen - beispielsweise bei der Höhenverstellung der Umlenkvorrichtung 3 - wird somit ausgeschlossen. Dies gilt auch, wenn die höhenverstellbare Umlenkvorrichtung 3 im Sitzen ohne Hinzusehen verstellt wird.

Zusammenfassend kann gesagt werden, dass durch die Erfindung eine Umlenkvorrichtung 3 gegeben ist, die im Vergleich zu den herkömmlichen Ausführungen durch eine sehr kleine Bauform besticht, die darüber hinaus eine gute Integrationsfähigkeit innerhalb eines Fahrzeugsitzes 1 aufweist und vollständig gekapselt ist, so dass das Verletzungsrisiko gegen Null geht und beinahe wartungsfrei ist, da kein Schmutz in sie gelangt. Darüber hinaus besteht die erfindungsgemäße Umlenkvorrichtung 3 aus nur wenigen Bauteilen. Es sind sogar lediglich drei Komponenten nötig, nämlich ein Halter 4, ein Umlenker 11 und eine dazwischen angeordnete Feder 10, da der Umlenker 11 gleichzeitig auch als Betätigungselement dient. Es ist dann auch kein zusätzlicher weiterer gurtseitig angebrachter Umlenker 11 notwendig. Des Weiteren gewährt die erfindungsgemäße Umlenkvorrichtung 3 ein gutes Gurtaufrollverhalten, da überwiegend Rollreibung statt Gleitreibung entsteht. Die erfindungsgemäße Umlenkvorrichtung 3 klappert nicht und gibt keine anderen Geräusche ab, da es sich um ein System handelt, bei dem der Umlenker 11 mittels der federvorgespannten Drehachse 13 im Halter 4 angedrückt ist.

### Bezugszeichenliste

- 1: Fahrzeugsitz
- 2: Dreipunktgurt
- 3: Umlenkvorrichtung
- 4: Halter
- 5: Verbindungsplatte
- 6: Tragwinkel
- 7: Erste Verbindungsmittel
- 8: Langloch
- 9: Tragelement
- 10: Feder
- 11: Umlenker
- 12: Rolle
- 13: Drehachse
- 14: Mantelfläche
- 15: Austrittsschlitz
- 16: Seitenfläche
- 17: Zweite Verbindungsmittel
- 18: Blende
- 19: Rückenlehne
- 20: Polsterung
- 21: Entriegelungsweg
- 22: Relativweg
- 23: Oberer Haltepunkt
- 24: Gehäuse
- 25: Druck
- 26: Bohrung
- 27: Ende der Drehachse
- 28: Freies Ende der Feder
- 29: Gurtband

## Patentansprüche

1. Höhenverstellbare Umlenkvorrichtung (3) für den oberen Haltepunkt (23) eines Dreipunktgurtes (2) mit einem Halter (4), der an einem Tragelement (9) eines Fahrzeugsitzes (1) anbringbar oder mit einem Rahmen eines Fahrzeugs fest verbindbar ist,
wobei im Halter (4) ein Umlenker (11) beweglich angebracht ist, der eine Rolle (12) mit einer Drehachse (13), über die das Gurtband (29) eines Dreipunktgurtes (2) führbar ist, sowie ein Gehäuse (24) mit einem Austrittsschlitz (15) für das Gurtband (29) aufweist, welches parallel zur Drehachse (13) der Rolle (12) ist,
wobei am Halter (4) erste Verbindungsmittel (7) und am Umlenker (11) zweite Verbindungsmittel (17) ausgebildet sind, die in einer Sperrposition formschlüssig miteinander in Eingriff sind und in einer Verstellposition nicht miteinander in Eingriff sind, so dass der Umlenker (11) um die Drehachse (13) rotierbar ist,
wobei die Drehachse (13) des Umlenkers (11) mittels einer Feder (10) in die Sperrposition gedrückt wird und der Halter (4) eine Verbindungsplatte (5) und zwei Tragwinkel (6) aufweist, in denen jeweils ein Langloch (8) zur Aufnahme der Drehachse (13) des Umlenkers (11) ausgebildet ist,
und der Umlenker (11) und die Rolle (12) eine einzige übereinstimmende Drehachse (13) aufweisen.

2. Höhenverstellbare Umlenkvorrichtung (3) nach Anspruch 1, **dadurch gekennzeichnet, dass** es sich bei den ersten Verbindungsmitteln (7) und den zweiten Verbindungsmitteln (17) jeweils um aufeinander abgestimmte Verzahnungen handelt.

3. Höhenverstellbare Umlenkvorrichtung (3) nach einem der Ansprüche 1 oder 2, **dadurch gekennzeichnet, dass** die Feder als eine Biegefeder ausgebildet ist.

4. Höhenverstellbare Umlenkvorrichtung (3) nach einem der Ansprüche 1 bis 3, **dadurch gekennzeichnet, dass** das Gehäuse (24) des Umlenkers (11) eine zylinderförmige oder konzentrisch konvex um die Drehachse (13) ausgebildete Mantelfläche (14) aufweist.

5. Höhenverstellbare Umlenkvorrichtung (3) nach einem der Ansprüche 1 bis 4, **dadurch gekennzeichnet, dass** die Rolle (12) einen Gurtaufroller umfasst.

6. Höhenverstellbare Umlenkvorrichtung (3) nach einem der Ansprüche 1 bis 5, **dadurch gekennzeichnet, dass** sie im Fahrzeugsitz (1) angeordnet ist und der Umlenker (11) teilweise von einer Blende (18) abgedeckt ist.

7. Höhenverstellbare Umlenkvorrichtung (3) nach einem der Ansprüche 1 bis 6, **dadurch gekennzeichnet, dass** die Drehachse (13) im Bereich ihrer beiden Enden (27) jeweils eine Bohrung (26) aufweist, durch die die freien Enden (28) der Feder (10) geführt sind.

8. Höhenverstellbare Umlenkvorrichtung (3) nach einem der Ansprüche 1 bis 6, **dadurch gekennzeichnet, dass** die Drehachse (13) mit der Rolle (12) und/oder dem Gehäuse (24) einstückig ausgebildet ist.

9. Fahrzeugsitz (1) mit einem Dreipunktgurt (2), der eine höhenverstellbare Umlenkvorrichtung (3) nach einem der vorstehenden Ansprüche aufweist.

10. Verfahren zur Höhenverstellung des oberen Haltepunktes (23) eines Dreipunktgurtes (2) mittels einer höhenverstellbaren Umlenkvorrichtung (3) gemäß einem der Ansprüche 1 bis 8, bei dem man den Umlenker (11) gegen einen Druck nach hinten drückt, ihn um die Drehachse (13) rotiert und ihn wieder loslässt.

## Claims

1. Height-adjustable deflection device (3) for the upper fastening point (23) of a three-point belt (2) with a holder (4) which can be attached to a supporting member (9) of a vehicle seat (1) or can be fixedly connected to a framework of a vehicle,
wherein a deflector (11) is moveably attached in the holder (4), which has a reel (12) with a rotary axis (13), via which the seat belt strap (29) of a three-point belt (2) can be guided, and a housing (24) with an outlet slot (15) for the seat belt strap (29), which is parallel to the rotary axis (13) of the reel (12),
wherein first connecting means (7) are formed on the holder (4) and second connecting means (17) on the deflector (11) which engage with each other in a locked position in form-locking manner and do not engage with each other in an adjustment position, with the result that the deflector (11) can be rotated about the rotary axis (13),
wherein the rotary axis (13) of the deflector (11) is pressed into the locked position by means of a spring (10)
and the holder (4) has a connecting plate (5) and two supporting brackets (6), in each of which an oblong hole (8) is formed to receive the rotary axis (13) of the deflector (11),
and the deflector (11) and the reel (12) have a single common rotary axis (13).

2. Height-adjustable deflection device (3) according to claim 1, **characterized in that** the first connecting means (7) and the second connecting means (17) are each gear tooth systems matched to each other.

3. Height-adjustable deflection device (3) according to one of claims 1 or 2, **characterized in that** the spring is formed as a spiral spring.

4. Height-adjustable deflection device (3) according to one of claims 1 to 3, **characterized in that** the housing (24) of the deflector (11) has a casing surface (14) which is formed cylindrical or concentrically convex about the rotary axis (13).

5. Height-adjustable deflection device (3) according to one of claims 1 to 4, **characterized in that** the reel (12) comprises a belt-retractor.

6. Height-adjustable deflection device (3) according to one of claims 1 to 5, **characterized in that** it is arranged in the vehicle seat (1) and the deflector (11) is partly covered by a shield (18).

7. Height-adjustable deflection device (3) according to one of claims 1 to 6, **characterized in that** the rotary axis (13) has, in the region of each of its two ends (27), a bore (26) through which the free ends (28) of the spring (10) are guided.

8. Height-adjustable deflection device (3) according to one of claims 1 to 6, **characterized in that** the rotary axis (13) is formed in one piece with the reel (12) and/or the housing (24).

9. Vehicle seat (1) with a three-point belt (2) which has a height-adjustable deflection device (3) according to one of the above claims.

10. Method for the height adjustment of the upper fastening point (23) of a three-point belt (2) by means of a height-adjustable deflection device (3) according to one of claims 1 to 8, in which the deflector (11) is pressed backwards against a pressure, rotated about the rotary axis (13) and released again.

## Revendications

1. Dispositif de déviation (3) réglable en hauteur pour le point de retenue supérieur (23) d'une ceinture trois points (2) avec un élément de retenue (4) pouvant être placé contre un élément de support (9) d'un siège de véhicule (1) ou pouvant être relié fixement à un cadre de véhicule,
un élément de déviation (11) pouvant être disposé de façon mobile dans l'élément de retenue (4), l'élément de déviation présentant un rouleau (12) avec un axe de rotation (13) par l'intermédiaire duquel la sangle de ceinture (29) d'une ceinture trois points (2) peut être guidée, ainsi qu'un boîtier (24) avec une fente de sortie (15) pour la sangle de ceinture (29), parallèle à l'axe de rotation (13) du rouleau (12),
un premier moyen de jonction (7) étant formé au niveau de l'élément de retenue (4) et un second élément de jonction (17) étant formé au niveau de l'élément de déviation (11), lesdits éléments s'engrenant l'un l'autre par complémentarité de forme dans une position verrouillée et
n'étant pas engrenés l'un l'autre dans une position de réglage, de sorte que l'élément de déviation (11) puisse tourner autour de l'axe de rotation (13),
l'axe de rotation (13) de l'élément de déviation (11) étant comprimé dans la position verrouillée à l'aide d'un ressort (10) et l'élément de retenue (4) présentant une plaque de jonction (5) et deux angles de support (6) dans lesquels respectivement un trou oblong (8) est formé pour recevoir l'axe de rotation (13) de l'élément de déviation (11),
et l'élément de déviation (11) et le rouleau (12) présentant un axe de rotation (13) coïncidant unique.

2. Dispositif de déviation (3) réglable en hauteur selon la revendication 1, **caractérisé en ce que** le premier moyen de jonction (7) et le second moyen de jonction (17) sont respectivement des dentures ajustées l'une par rapport à l'autre.

3. Dispositif de déviation (3) réglable en hauteur selon l'une quelconque des revendications 1 ou 2, **caractérisé en ce que** le ressort prend la forme d'un ressort de flexion.

4. Dispositif de déviation (3) réglable en hauteur selon l'une quelconque des revendications 1 à 3, **caractérisé en ce que** le boîtier (24) de l'élément de déviation (11) présente une surface enveloppante (14) de forme cylindrique ou réalisée de façon concentriquement convexe autour de l'axe de rotation (13).

5. Dispositif de déviation (3) réglable en hauteur selon l'une quelconque des revendications 1 à 4, **caractérisé en ce que** le rouleau (12) comprend un enrouleur de ceinture.

6. Dispositif de déviation (3) réglable en hauteur selon l'une quelconque des revendications 1 à 5, **caractérisé en ce qu'**il est disposé dans le siège de véhicule (1) et que l'élément de déviation (11) est en partie recouvert par un cache (18).

7. Dispositif de déviation (3) réglable en hauteur selon l'une quelconque des revendications 1 à 6, **caractérisé en ce que** l'axe de rotation (13) présente respectivement un alésage (26) dans la zone de ses deux extrémités (27) à travers lequel les extrémités libres (28) des ressorts (10) sont guidées.

8. Dispositif de déviation (3) réglable en hauteur selon l'une quelconque des revendications 1 à 6, **caractérisé en ce que** l'axe de rotation (13) peut être réalisé d'un seul tenant avec le rouleau (12) et/ou le boîtier (24).

9. Siège de véhicule (1) avec une ceinture trois points (2) qui présente un dispositif de déviation (3) réglable en hauteur selon l'une quelconque des revendications précédentes.

10. Procédé de réglage en hauteur du point de retenue supérieur (23) d'une ceinture trois points (2) à l'aide d'un dispositif de déviation (3) réglable en hauteur selon l'une quelconque des revendications 1 à 8, dans lequel on comprime l'élément de déviation (11) vers l'arrière contre une pression, on le tourne autour de l'axe de rotation (13) et on le relâche à nouveau.
